# EUROPEAN PATENT APPLICATION

(11) **EP 1 176 812 A1**
(43) Date of publication of application: **30.01.2002**
(21) Application number: 01306471.2
(22) Date of filing: 27.07.2001
(51) Int. Cl.: H04N 5/238, G02B 27/14

(54) **High speed imaging cameras**

(30) Priority: 28.07.2000 JP 2000229496
(71) Applicant: Hamamatsu Photonics K.K., Shizuoka-ken 435-8558 (JP)
(72) Inventor: Isobe, Yoshio, c/o Hamamatsu Photonics K.K., Hamamatsu-shi, Shizuoka 435-8558 (JP); Makino, Tsuyoshi, c/o Hamamatsu Photonics K.K., Hamamatsu-shi, Shizuoka 435-8558 (JP); Suzuki, Kazutaka, c/o Hamamatsu Photonics K.K., Hamamatsu-shi, Shizuoka 435-8558 (JP); Miyazaki, Takahiro, c/o Hamamatsu Photonics K.K., Hamamatsu-shi, Shizuoka 435-8558 (JP)
(74) Representative: Whitten, George Alan

(57) **Abstract**

An incident light beam is split into four beams by a pupil dividing element 3b, the beams are multiplied by four respective image intensifiers 1a, and thereafter the beams are imaged by four CCDs 1c₁. Imaging times of the four CCDs 1c₁ are shifted from each other. Exposure periods become shorter with increase of the frame rate of the CCDs 1c₁, the image intensifiers 1a compensate for the shorter exposure periods, and the imaging times are shifted from each other, thereby implementing the high speed imaging never achieved before. Further, an optical path length is variable between the imaging devices 1c₁ or photo-cathodes and an exit pupil of a taking lens 2 and a distance is fixed between the exit pupil and the pupil dividing element 3b, which can implement even splitting and suppress shading, thus enabling the imaging with high quality.

## Description

### BACKGROUND OF THE INVENTION

### Field of the Invention

The present invention relates to high speed imaging cameras used for imaging the physical phenomena such as combustion, collision, expansion, contraction, deformation, luminescence, and so on.

### Related Background Art

Expectations are rising for cameras for imaging high speed phenomena. In ordinary television cameras, images are picked up at about 30 frames per second. An imaging camera for implementing faster imaging is described in National Publication No. H09-505672 of Translated Version of a PCT application. This Publication discloses that an image is optically split into eight images, they are picked up by eight CCDs, and, in the case of the CCDs implementing image pickup at about 30 frames per second, images can be picked up at a maximum rate of about 240 frames per second. For collision experiments at laboratories and the like, silver film is fed at a high rate to the camera to implement the image pickup at the frame rate of 1000 frames per second.

### SUMMARY OF THE INVENTION

It is, however, impossible for the conventional imaging cameras to implement the image pickup, for example, at the frame rate of 200,000,000 frames per second. If such an imaging camera were available, the physical phenomena could be analyzed in further detail. If the image pickup were implemented with high quality and depressed shading, the analysis of the phenomena could be further promoted. The present invention has been accomplished in view of this problem and an object of the invention is to provide high speed imaging cameras that can implement the image pickup at a higher rate or with higher quality than before.

For solving the above problem, a high speed imaging camera according to the present invention is a high speed imaging camera comprising splitting means for splitting an incident light beam into a plurality of incident beams, and a plurality of imaging devices for imaging each of the plurality of incident beams produced by the splitting means, the high speed imaging camera comprising a plurality of multiplying means for multiplying respective images of the plurality of incident beams.

According to the camera of the present invention, first, the frame rate of the imaging devices is raised. The amount of received light decreases with the rise of the frame rate, but it can be multiplied by the multiplying means. Therefore, the camera can implement the high speed imaging even with the rise of the frame rate. Since the splitting means splits the incident light beam, if imaging times of the individual imaging devices are shifted relative to each other, the frame rate can be drastically increased eventually as compared with the conventional cameras.

The high speed imaging camera according to the present invention is characterized in that the camera comprises a taking lens for projecting the incident light beam onto the splitting means, the multiplying means are image intensifiers, each image intensifier comprising a photo-cathode for photoelectrically converting an incident light image into an electronic image and a fluorescence generating material for converting the electronic image into a fluorescent image, and the image intensifier multiplies an incident light image inputted and emits a multiplied image to the imaging device.

Cf course, the multiplying means for multiplying the incident light image can be electron collision type CCDs in each of which the imaging device is opposed to the photo-cathode in vacuum, and in this case, the multiplying means can also multiply the respective images of the plurality of incident beams.

The position where the incident light images are focused by the taking lens, varies according to the distance between an object and the taking lens. In the present invention, therefore, an optical path length between the photo-cathode and the exit pupil of the taking lens is variable and the optical path length is changed according to the position of the object.

In this configuration, if the splitting means is spaced apart from the exit pupil, beam splitting will become uneven. If the distance between them varies, shading will occur. In the high speed imaging camera of the present invention, therefore, the splitting means is located adjacent to the exit pupil and the distance between this exit pupil and the splitting means is fixed, so as to implement even splitting and suppress the shading, thereby enabling imaging with high quality. Since the distance between the exit pupil and the splitting means is fixed, the splitting means moves relative to the photo-cathode with variation of the optical path length.

There are a variety of conceivable configuration as the splitting means, but the splitting means is preferably a pyramid mirror,

Another high speed imaging camera according to the present invention is a high speed imaging camera arranged to split an incident light beam entering a taking lens, into a plurality of incident beams by splitting means, and comprising a plurality of imaging devices for imaging each of the incident beams thus produced, wherein an optical path length between said imaging devices and an exit pupil of said taking lens is variable, said splitting means is located adjacent to said exit pupil, and a distance between said exit pupil and said splitting means is fixed. In this camera, the incident light beam is split by the splitting means, so as to permit high speed imaging, while the camera is configured to implement the even splitting and suppress the shading as described above, thereby realizing the imaging with high quality.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a perspective view of a high speed imaging camera.
Fig. 2 is a vertical, cross-sectional view along a line with arrows II-II of the high speed imaging camera cut along the optical axis of the camera shown in Fig. 1.
Fig. 3 is a vertical, cross-sectional view along a line with arrows III-III of the high speed imaging camera cut by a plane normal to the optical axis of the camera shown in Fig. 2.
Fig. 4 is a back view of the high speed imaging camera obtained when the camera shown in Fig. 2 is seen from the back side of the camera as indicated by an arrow IV.
Fig. 5 is a vertical, cross-sectional view of another high speed imaging camera cut along the optical axis of the high speed imaging camera according to the second embodiment.
Fig. 6 is a vertical, cross-sectional view along a line with arrows VI-VI of the high speed imaging camera cut by a plane normal to the optical axis of the camera shown in Fig. 5.
Fig, 7 is an explanatory drawing showing a state of the camera in which the object is located at infinity.
Fig. 8 is an explanatory drawing showing a state of the camera in which the object OBJ is located at a near distance.
Fig. 9 is an explanatory drawing showing a state of the camera in which the optical path length is adjusted on the taking lens 2 side.

### DESCRIPTION OF THE PREFERRED EMBODIMENT

High speed imaging cameras of embodiments will be described below. The same elements will be denoted by the same reference symbols and redundant description will be omitted.

### (First Embodiment)

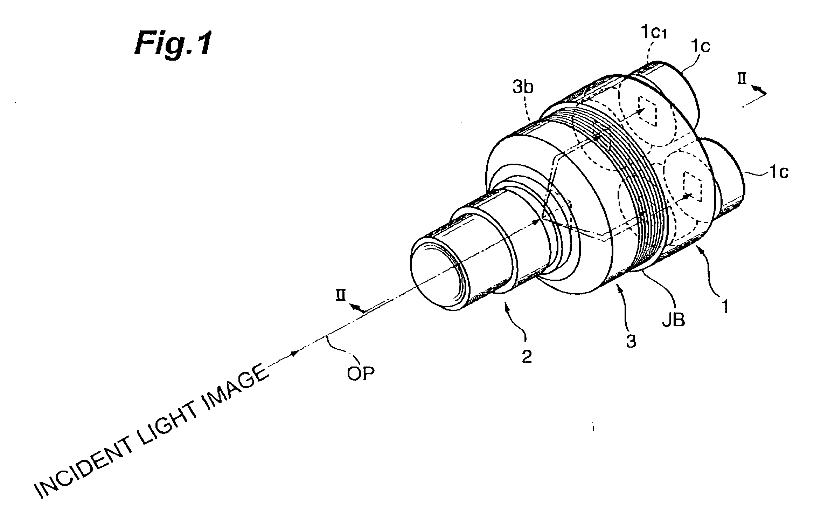

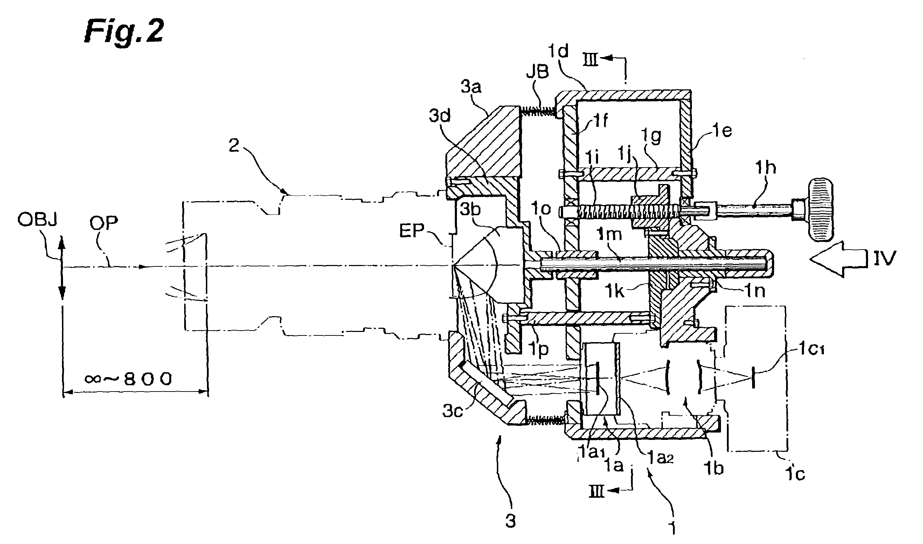

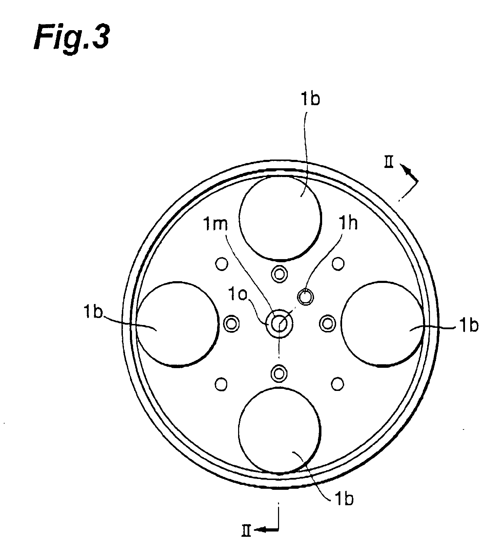

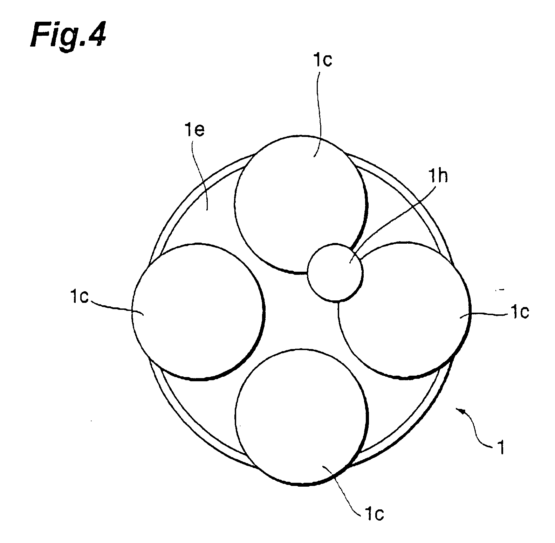

Fig. 1 is a perspective view of a high speed imaging camera, Fig. 2 a vertical, cross-sectional view along a line with arrows II-II of the high speed imaging camera cut along the optical axis of the camera shown in Fig. 1, Fig. 3 a vertical, cross-sectional view along a line with arrows III-III of the high speed imaging camera cut by a plane normal to the optical axis of the camera shown in Fig. 2, and Fig. 4 a back view of the high speed imaging camera obtained when the camera shown in Fig. 2 is seen from the back side of the camera as indicated by an arrow IV. The cross-sectional view shown in Fig. 2 is also a cross-sectional view along a line with arrows II-II of the camera shown in Fig. 3.

The high speed imaging camera according to the present embodiment is provided with a camera body 1, a taking lens 2, and an optic unit 3 for splitting, to which the taking lens 2 is attached and which is movable relative to the camera body 1 The splitting optic unit 3 moves along the optical axis OP of the taking lens 2.

The taking lens 2 is mounted on the splitting optic unit 3 and the optic unit 3 is provided with a support member 3a having an aperture portion through which an incident light beam emerging from the taking lens 2 passes, a pupil dividing element (splitting means) 3b disposed in the aperture portion of the support member 3a, and mirrors 3c fixed on internal surfaces of the support member 3a. The taking lens 2 is one having its exit pupil on the pupil dividing element 3b and is a 105mm lens with the F-value of 3.2 in the present example. This taking lens 2 can form an image of an object OBJ located in the range of infinity to 800 mm.

The pupil dividing element 3b is fixed to a slide panel 3d and the slide panel 3d is fixed to an internal surface of the aperture portion of the support member 3a. Therefore, the pupil dividing element 3b is fixed to the support member 3a.

The number of mirrors 3c is plural. The pupil dividing element 3b is comprised of a pyramid mirror and is located adjacent to the exit pupil EP positioned in an innermost lens of the taking lens 2. Mirrors making the pupil dividing element 3b split an incident light beam incident from the taking lens 2 to the pupil dividing element 3b (into four beams in this example). The mirrors making the pupil dividing element 3b reflect the respective, incident light beams thus produced, toward the corresponding mirrors 3c placed opposite thereto. Each mirror 3c reflects the incident light beam entering it, toward the camera body 1 and the incident beam thus reflected is focused on a corresponding image intensifier 1a.

The image intensifiers 1a are comprised of image intensifier tubes (I.I. tubes) and the number of I.I. tubes 1a is the same as the number of the above split beams. The image intensifiers 1a multiply (or intensify) the respective, incident light beams and emit intensified beams. The I.I. tubes 1a are placed inside the camera body 1 and the incident light images emerging from the I.I. tubes 1a are incident to relay lenses 1b corresponding to the respective tubes, The number of relay lenses 1b is the same as the number of I.I. tubes 1a.

The incident light image outputted from each relay lens 1b is incident to a CCD (semiconductor imaging device) 1c₁ placed inside a corresponding CCD unit 1c. The number of CCDs 1c₁ is the same as the number of relay lenses 1b. The space between the camera body 1 and the support member 3a is shielded by a telescopic shield JB interposed between them. The shield JB is comprised of bellows or the like.

The I.I. tubes 1a will be detailed. Each I.I. tube 1a has a photo-cathode 1a₁ for photoelectrically converting an incident light image to an electronic image, and a fluorescence generating material 1a₂ for converting the electronic image to a fluorescent image, and multiplies the incident light image inputted thereinto and emits a multiplied image to the CCD 1c₁. The photo-cathode 1a₁ is made, for example, of multiple alkalis (Na₂KSb(Cs)) or the like, and the fluorescence generating material 1a₂, for example, of P43 (Gd₂O₂S:Tb) or the like.

Of course, the CCDs of the electron collision type wherein the CCD is opposed to the photo-cathode in vacuum, can also be applied to the multiplying means for multiplying the incident light images, and in this case, the multiplying means also multiply the respective images of the plurality of incident beams.

As described above, a light beam from the object OBJ is incident to the taking lens 2, the beam is split into a plurality of beams by the pupil dividing element 3b, thereafter the split beams are focused via the corresponding mirrors 3c, I.I tubes 1a, and relay lenses 1b on the respective CCDs 1c₁, and the respective CCDs 1c₁ output video signals of the incident light images.

Here imaging times of the individual CCDs 1c₁, i.e., exposure times or shutter times are shifted from each other. Accordingly, when a plurality of video signals (four signals in this example) finally obtained are superimposed, the frame rate can be increased to multiple times (four times) the frame rate of one CCD 1c₁.

The camera body 1 is provided with a housing consisting of a cylinder 1d and support plates 1e, 1f closing openings at the both ends of the cylinder. The support plate 1e is fixed to the back side of the cylinder id. The front opening end of the cylinder 1d makes a flange portion bent inward and the front support plate 1f is urged from the back side through spacer 1g against the flange portion. Namely, the spacer 1g is interposed between the support plates 1e and if and these together are fixed to the cylinder 1d.

When an adjusting screw (focusing mechanism) 1h penetrating the back support plate 1e is rotated, a shaft 1i, which is arranged in a rotatable state so as to penetrate between the support plates 1e and 1f, rotates about its axis relative to the support plates 1e, 1f. A thread (male screw) is cut around the shaft 1i. A nut portion (female screw: micrometer screw) 1j is in mesh with the male screw and the nut portion 1j is restrained from rotating relative to the support plates. Therefore, the nut portion 1j moves along the longitudinal direction of the shaft 1i with rotation of the shaft 1i.

The nut portion 1j is fixed to an engaging member lk. The engaging member 1k is fitted and fixed to a spline 1m so as to limit rotation thereof about the axis of the spline lm. The spline 1m is fitted in guide members 1n, 1o fixed to the support plates 1e, 1f so as not to rotate about its axis, but is slidable along the direction of its axis.

The engaging member 1k is fixed through a spacer 1p to the slide panel 3d. The slide panel 3d is also fixed to the spline 1m and these move together. Namely, when the adjusting screw 1h is rotated, the nut portion 1j moves along the longitudinal direction of the shaft 1i and the engaging member 1k, fixed to the nut portion 1j, moves along the longitudinal direction, together with the spacer 1p, spline 1m, and slide panel 3d integrally. This longitudinal direction is parallel to the optical axis OP and, particularly, the axis of the spline 1m is coincident with the optical axis OP.

When the slide panel 3d moves along the optical axis OP as described above, the taking lens 2 fixed thereto, the exit pupil EP thereof, the pupil dividing element 3b, and the mirrors 3c move integrally relative to the camera body 1 along the optical axis OP.

In use of this apparatus, when the images outputted from the CCDs 1c₁ are cbserved in a monitor and are judged in focus, that is, when the object images are judged to be focused on the photo-cathodes 1a₁, the rotation of the adjusting screw 1h is stopped.

As described above, the high speed imaging camera of the above embodiment is one comprising the pupil dividing element (splitting means) 3b for splitting the incident beam into a plurality of beams, and a plurality of semiconductor imaging devices 1c₁ for imaging each of the plurality of incident light beams produced by the pupil dividing element 3b, which further comprises a plurality of I.I. tubes (multiplying means) 1a for multiplying the respective images of the plurality of incident beams.

In this camera, first, the frame rate of the semiconductor imaging devices 1c₁ is increased. The amount of received light is decreased with increase in the frame rate, but it can be multiplied by the I.I. tubes 1a, which allows the high speed imaging even with the increase of the frame rate. Since the pupil dividing element 3b splits the incident light beam, when the imaging times of the individual semiconductor imaging devices 1c₁ are shifted relative to each other, the frame rate can be drastically increased eventually as compared the conventional cameras.

Described below is the positional relation among the objet OBJ, the taking lens 2, the pupil dividing element 3b, and the I.I. tubes 1a.

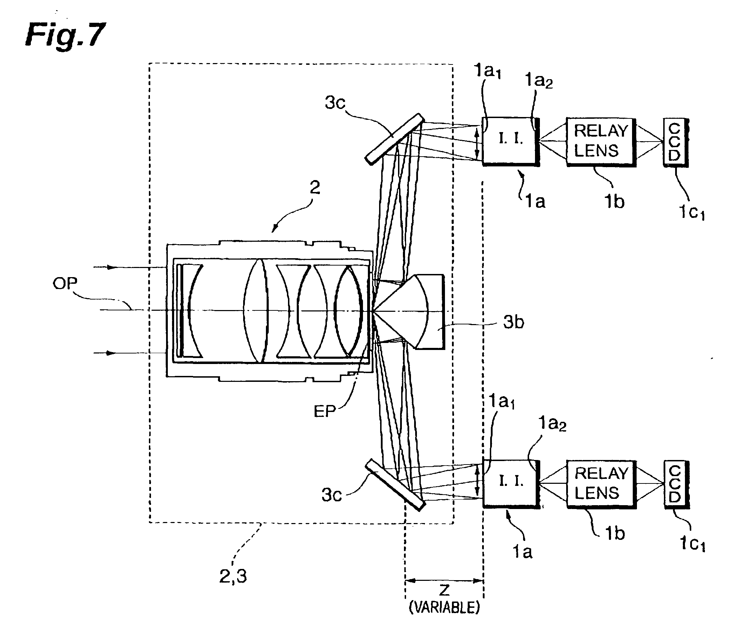

Fig. 7 is an explanatory drawing showing a state of the camera in which the object is located at infinity. Parallel light is incident to the taking lens 2 and it travels through the exit pupil EP to impinge on the pupil dividing element 3b. The split beams produced by the pupil dividing element 3b are reflected by the respective mirrors 3c to be focused on the photo-cathodes 1a₁ of the I.I. tubes 1a. Here the incident light images are converted to electronic images and thereafter they enter the fluorescence generating materials 1a₂ to be multiplied in intensity and then outputted. After that, the incident light images thus multiplied are focused through the relay lenses 1b on the CCDs 1c₁.

There are a variety of conceivable configurations for the pupil dividing element 3b, but the present example employs the pyramid mirror. The vertex of the pyramid type pupil dividing element 3b is located on the optical axis OP. Let Z be a distance along the optical axis OP between the center of the pupil dividing element 3b and the photo-cathodes 1a₁.

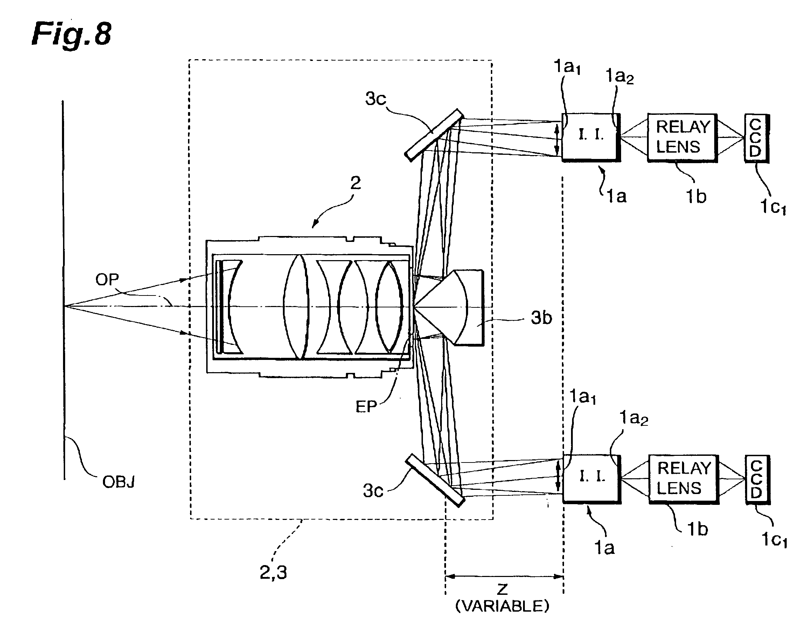

Fig. 8 is an explanatory drawing showing a state of the camera in which the object OBJ is located at a near distance. As shown in the same figure, the focus position of the incident light images by the taking lens 2, i.e., the foregoing distance Z varies according to the distance between the object CBJ and the taking lens 2, Then the camera is so constructed that the optical path length between the photo-cathodes 1a₁ and the exit pupil EP of the taking lens 2, i.e., the distance Z indirectly indicating it is variable and that the optical path length is changed according to the position of the object OBJ.

In this structure, if the pupil dividing element 3b were placed apart from the exit pupil EP, the beam splitting would be uneven. The shading would also occur with change in the distance between them. Thus the present high speed imaging camera is constructed in such structure that the pupil dividing element 3b is located adjacent to the exit pupil EP and that the distance between this exit pupil EP and the pupil dividing element 3b is fixed, so as to implement the even splitting and suppressed the shading, thereby enabling the imaging with high quality. Since the distance between the exit pupil EP and the pupil dividing element 3b is fixed, the pupil dividing element 3b moves relative to the photo-cathodes 1a₁ and the CCDs 1c₁ with change of the foregoing optical path length.

Additional description will be given as to this point.

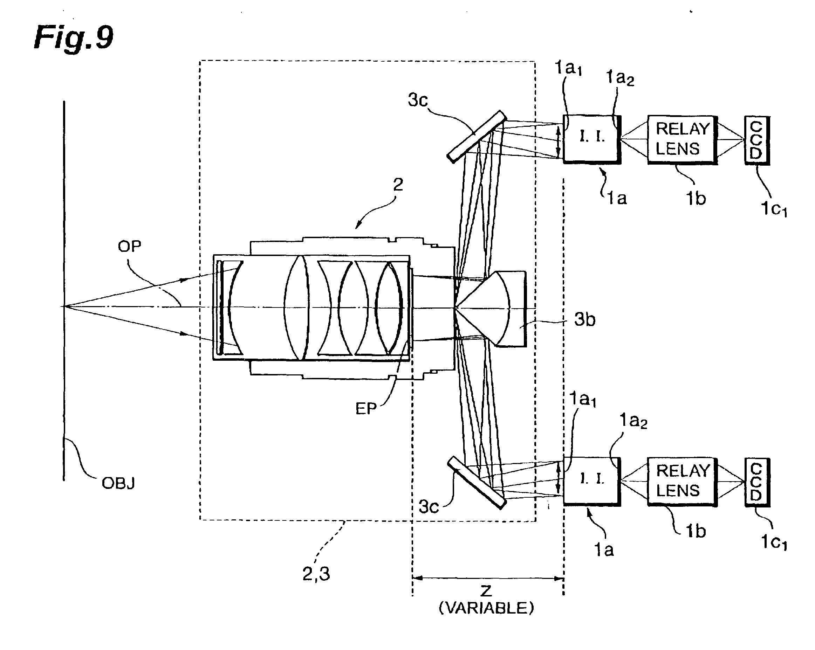

Fig. 9 is an explanatory drawing showing a state of the camera in which the foregoing optical path length is adjusted on the taking lens 2 side. In this structure, the lens unit of taking lens 2 projects forward with decrease in the distance to the object OBJ to vary the distance Z' and at this time the exit pupil EP moves away from the pupil dividing element 3b, which does not allow even splitting.

The high speed imaging camera of the present embodiment is one arranged to split the incident light beam entering the taking lens 2, into a plurality of incident beams by the pupil dividing element 3b and comprising a plurality of imaging devices 1c₁ for imaging the respective, incident beams thus produced, wherein the optical path length between the imaging devices 1c₁ and the exit pupil EP of the taking lens 2 is variable, the pupil dividing element 3b is located adjacent to the exit pupil EP, and the distance between the exit pupil EP and the pupil dividing element 3b is fixed. In this camera, the high speed imaging can be implemented by splitting the incident beam by the pupil dividing element 3b, and the high-quality imaging can be also implemented while effecting the even splitting and suppressing the shading as described above.

### (Second Embodiment)

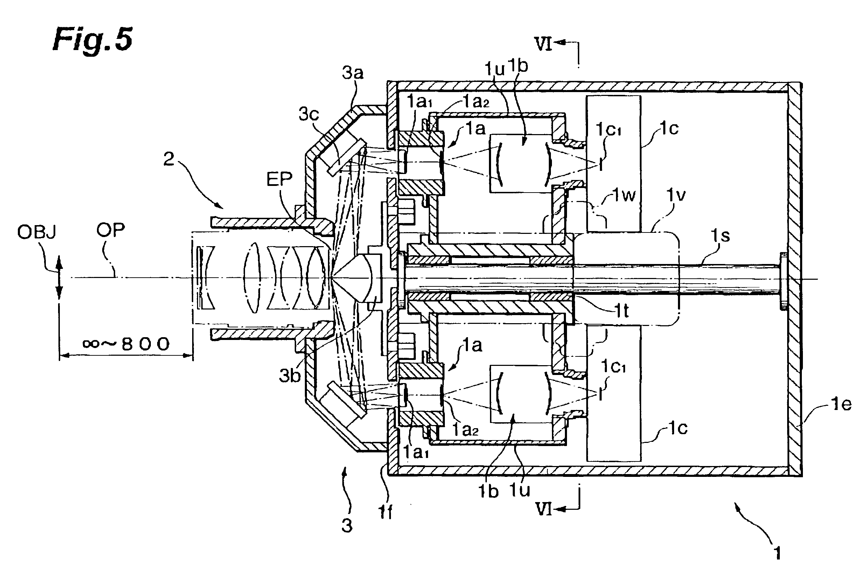

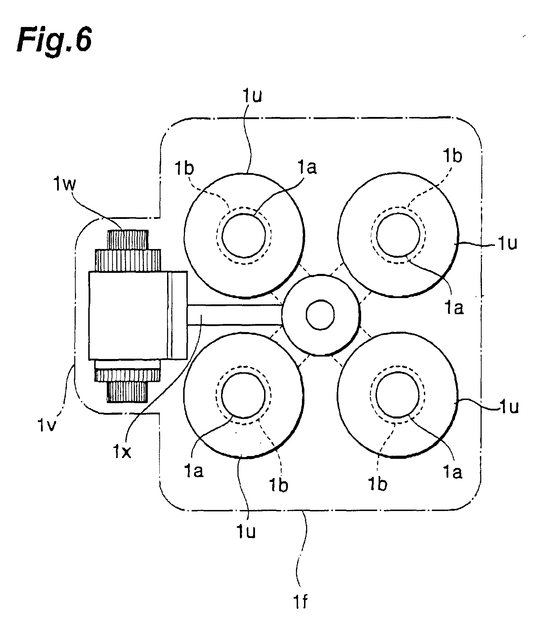

Fig. 5 is a vertical, cross-sectional view of a high speed imaging camera cut along the optical axis of the high speed imaging camera according to the second embodiment, and Fig. 6 is a vertical, cross-sectional view along a line with arrows VI-VI of the high speed imaging camera cut by a plane normal to the optical axis of the camera shown in Fig. 5. The same elements and configurations as those in the first embodiment will be denoted by the same reference symbols and the description thereof will be omitted.

In the camera of the first embodiment described above, the splitting optic unit 3 moved together with the taking lens 2 relative to the camera body 1, more specifically, relative to the photo-cathodes 1a₁. In the second embodiment, the splitting optic unit 3 is fixed together with the taking lens 2 to the camera body 1, and the photo-cathodes 1a₁ move relative to the taking lens 2.

Inside the camera body 1 there are provided barrels lu each of which embraces the relay lens 1b and which fixes the I.I. tube 1a on the front surface side and the CCD 1c on the back surface side.

The support plates 1e, 1f are provided on the back surface and on the front surface of the camera body 1 and a shaft (spline) is horizontally extends and is fixed between these plates 1e, 1f. A slider (focusing mechanism) 1t is provided on the peripheral surface of the shaft 1s so as to be slidable along the direction of the axis thereof.

A focusing stage lv is mounted on the side face of the camera body 1 and an adjusting knob 1w is attached to the stage 1v. When the adjusting knob 1w is rotated, the rotational driving force is transmitted through a connecting rod lx to the slider 1t to move the slider 1t along the optical axis OP. This transmitting mechanism can be a rack and pinion system or the like.

When the slider lt is moved along the optical axis OP, i.e., along the longitudinal direction of the shaft ls, the I.I. tubes 1a, relay lenses 1b, and CCDs 1c fixed to the slider lt move integrally, so that the optical path length between the exit pupil EP of the taking lens 2 and the photo-cathodes 1a₁ varies. The optical path length between the exit pupil EP and the CCDs 1c₁ also varies.

In use of this apparatus, the images outputted from the CCDs 1c₁ are observed on the monitor and the rotation of the adjusting knob 1w is stopped when the images are judged in focus, i.e., when the object images are judged to be focused on the photo-cathodes 1a₁.

The high speed imaging camera of the present embodiment is also one comprising the pupil dividing element (splitting means) 3b for splitting the incident light beam into a plurality of beams, the mirrors (in-plane fine adjusting mechanisms) 3c for reflecting the respective, incident beams produced by the pupil-dividing element 3b, and a plurality of semiconductor imaging devices 1c₁ for imaging the respective, incident beams thus produced, the camera comprising a plurality of I.I. tubes (multiplying means) la for multiplying the respective images of the plurality of incident beams, wherein imaging times of the individual semiconductor imaging devices 1c₁ are shifted relative to each other.

In addition, the optical path length Z is variable between the photo-cathodes 1a₁ and the exit pupil EP of the taking lens 2, the pupil dividing element 3b is located adjacent to the exit pupil EP, and the distance between the exit pupil EP and the pupil dividing element 3b is fixed, whereby it is feasible to implement the even splitting and suppress the shading, thereby permitting the imaging with high quality.

When the CCDs 1c₁ of this high speed imaging camera are four CCD cameras "C7300" available from Hamamatsu Photonics, it is feasible to achieve the frame rate of 200,000,000 (frames/sec), the shutter second of 5 (ns), and the resolution of 43 (lp/mm), and the number of frames can be set to either of 1, 2, 3, and 4, depending upon the number of cameras connected. Further, the number of frames can be set to either of 2, 4, 6, and 8 by externally controlling the switch timing of frames in each CCD camera (PIV operation). It can be also contemplated that the imaging times of the CCDs 1c₁ overlap with each other.

As described above, the present camera is so constructed that the incident beam is split into four beams by the pupil dividing element 3b, the split beams are multiplied by the four image intensifiers 1a, thereafter the beams are imaged by the four CCDs 1c₁, the frame rate of the CCDs 1c₁ is increased by shifting the imaging times of the four CCDs 1c₁, and the image intensifiers 1a compensate for the shorter exposure periods, thereby implementing the high speed imaging never achieved before. Further, the optical path length is variable between the imaging devices 1c₁ or the photo-cathodes 1a₁ and the exit pupil EP of the taking lens 2 and the distance is fixed between the exit pupil EP and the pupil dividing element 3b, which can implement the even splitting and suppress the shading, thereby enabling the imaging with high quality.

The high speed imaging cameras according to the present invention enable the high speed or high-quality imaging.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A high speed imaging camera comprising splitting means for splitting an incident light beam from a measured object into a plurality of incident beams, and a plurality of imaging devices for imaging each of the plurality of incident beams produced by said splitting means, said high speed imaging camera comprising a plurality of multiplying means for multiplying respective images of said plurality of incident beams.

2. The high speed imaging camera according to Claim 1, comprising a taking lens for projecting said incident light beam onto said splitting means, wherein said multiplying means are image intensifiers, each said image intensifier comprising a photo-cathode for photoelectrically converting an incident light image into an electronic image and a fluorescence generating material for converting the electronic image into a fluorescent image, wherein said image intensifier multiplies an incident light image and emits a multiplied image to said imaging device.

3. The high speed imaging camera according to Claim 2, wherein an optical path length between said photo-cathode and an exit pupil of said taking lens is variable.

4. The high speed imaging camera according to Claim 3, wherein said splitting means is located adjacent to said exit pupil and a distance between said exit pupil and said splitting means is fixed.

5. The high speed imaging camera according to Claim 4, wherein said splitting means is a pyramid mirror.

6. A high speed imaging camera arranged to split an incident light beam entering a taking lens, into a plurality of incident beams by splitting means, and comprising a plurality of imaging devices for imaging each of the incident beams thus produced, wherein an optical path length between said imaging devices and an exit pupil of said taking lens is variable, said splitting means is located adjacent to said exit pupil, and a distance between said exit pupil and said splitting means is fixed.
